Europäisches Patentamt

European Patent Office

Office européen des brevets

(19)

(11) Veröffentlichungsnummer: **0 030 040**
A1

(12) # EUROPÄISCHE PATENTANMELDUNG

(21) Anmeldenummer: 80200048.9

(22) Anmeldetag: 21.01.80

(51) Int. Cl.³: **F 02 C 6/16**
B 65 G 5/00, E 21 F 17/16

(30) Priorität: 29.11.79 CH 10619/79

(43) Veröffentlichungstag der Anmeldung:
10.06.81 Patentblatt 81/23

(84) Benannte Vertragsstaaten:
AT BE CH DE FR GB IT LU NL SE

(71) Anmelder: BBC Brown, Boveri & Cie.
(Aktiengesellschaft)

CH-5401 Baden(CH)

(72) Erfinder: Baumann, Hans, Dipl.-Ing.
Hombergsteig 15
CH-5415 Nussbaumen(CH)

(72) Erfinder: Svoboda, Robert. Dr.
Zentralstrasse 93
CH-5430 Wettingen(CH)

(54) Gleichdruckluftspeicheranlage mit Wasservorlage für Gasturbinenkraftwerke.

(57) Gleichdruckluftspeicheranlage für Gasturbinenkraftwerke, mit einer Kaverne (1) und einer Wasservorlage (2,3), wobei zur Verhütung der Diffusion von Luft in das Wasser der Wasservorlage der Wasserspiegel durch eine feste (6), flüssige oder aus kleinen Schwimmkörpern bestehende Diffusionsbarriere vom Luftraum separiert ist.

FIG.1

EP 0 030 040 A1

Croydon Printing Company Ltd.

0030040

142/79
Mü/dh

- 1 -

Gleichdruckluftspeicheranlage mit Wasservorlage für Gasturbinenkraftwerke

Die vorliegende Erfindung betrifft eine Gleichdruckluftspeicheranlage mit Wasservorlage für Gasturbinenkraftwerke
nach dem Oberbegriff des Patentanspruchs 1.

Gleichdruckluftspeicheranlagen für Gasturbinenkraftwerke
benötigen gegenüber gleich leistungsfähigen Luftspeicheranlagen mit variablem Luftdruck, der im Betrieb zwischen
gewissen Grenzen schwanken darf, nur etwa ein Drittel des
Volumens der letzteren. Dementsprechend sind der bauliche
Aufwand und die Erstellungskosten einer Kaverne für Gleichdruckspeicherung weit geringer als bei Kavernen für variablen Luftdruck.

Zur Konstanthaltung des Luftdruckes bei Gleichdruckspeicherung dient eine das in der Kaverne verbrauchte Luftvolumen
ausgleichende Wasservorlage mit einer Wassersäule, die in
ein freies, gewöhnlich an der Erdoberfläche liegendes Bassin
mündet und deren statische Druckhöhe dem in der Kaverne aufrechtzuerhaltenden Druck entspricht. Beim Laden der Kaverne,
die bei heutigen Anlagen in 600-800 m Tiefe liegt, entsprechend einem statischen Druck der Wassersäule von 60-80

- 2 -

bar, wird das Wasser in das Bassin hinaufgedrückt, beim Entladen läuft das Wasser aus dem Bassin in die Kaverne nach, um den gleichen Druck sicherzustellen.

Beim Betrieb von Luftspeichergasturbinenanlagen hat sich gezeigt, dass beim Laden der Kaverne die in der Wasservorlage aufsteigende Wassersäule die in ihr gelöste Luft freigibt, wodurch Luftblasen mit nach oben hin rasch zunehmendem Volumen entstehen, die eine Dichteabnahme in der Wassersäule und damit einen Druckabfall in der Kaverne bewirken. Im Extremfall könnte die Wassersäule vom Druckluftpolster ausgeblasen werden und die Kaverne sich somit vollständig entleeren.

Gegenüber der normalen Lösungsgeschwindigkeit von Luft in ruhendem Wasser erfolgt in der Kaverne die volle Sättigung infolge der starken Verwirbelung des Wassers bei den Lade- und Entladevorgängen rascher, da hierbei bald einmal alle Wasserteilchen mit der Luft in Berührung kommen. Die dabei vom Wasser aufgenommene Gewichtsmenge an Luft ist proportional dem Druck, der, wie gesagt, bei ausgeführten Anlagen zwischen 60 und 80 bar liegt. Ueber die dabei gelöste Luftmenge gibt folgender Vergleich Aufschluss:

Bei 1 bar Luftdruck und $10^{o}$C Temperatur enthält 1 m$^3$ Wasser (= 1000 kg) 29,2 g Luft.

Bei 60 bar Druck und $10^{o}$C Temperatur enthält 1 m$^3$ Wasser 1,7 kg Luft, also die etwa 58-fache Gewichtsmenge. Bei Atmosphärendruck entsprechen diese 1,7 kg Luft ca. 1,32 m$^3$. Ein von 60 bar Druck auf atmosphärischen Druck entspanntes

- 3 -

Wasser/Luft-Gemisch enthält also mehr Luft als Wasser.

Wenn derart mit Luft gesättigtes Wasser aus der Kaverne nach oben steigt, so wird durch den abnehmenden hydrostatischen Druck die Luft frei und bildet immer grössere Blasen. Die durchschnittliche Dichte der Wassersäule wird damit immer kleiner und der Druck in der Kaverne sinkt entsprechend. Dies kann, wenn nicht entsprechende Vorkehrungen getroffen werden, zum Ausblasen des Druckluftpolsters mit der Wassersäule führen.

Eine bisher bekanntgewordene Massnahme zur Verhütung dieses Ausblasens besteht darin, das die Wassersäule enthaltende Steigrohr in einem U-förmigen Bogen unter die Sohle der Kaverne hinab zu verlängern. Der tiefste Punkt des Steigrohrs muss dabei um mindestens 0,15 h unter dem jeweiligen Wasserspiegel in der Kaverne liegen, wobei h die wirksame Druckhöhe, d.h., die Differenz zwischen den geodätischen Höhen des Oberwasserspiegels im Ausgleichsbecken und des Kavernenwasserspiegels bedeutet.

Für h = 600 m würde dies bedeuten, dass das bereits 600 m lange Steigrohr noch um mindestens 90 m tiefer geführt werden müsste, und zwar doppelt, was einen untragbar hohen baulichen Mehraufwand darstellt.

Mit der vorliegenden, im kennzeichnenden Teil des Patentanspruchs 1 definierten Erfindung soll dieser schwerwiegende Nachteil vermieden werden.

Die Erfindung wird im folgenden unter Bezugnahme auf in der

- 4 -

Zeichnung dargestellte Ausführungsbeispiele näher beschrieben.

In der Zeichnung stellen dar:

Fig. 1  schematisch eine erste Ausführungsform einer erfindungsgemässen Gleichdruckluftspeicheranlage in einem Vertikalschnitt,

Fig. 2  den zu Fig. 1 gehörigen Grundriss in einem waagrechten Schnitt durch den Luftraum der Kaverne, die

Fig. 3  und 4 die Vertikalschnitte zweier weiterer Ausführungsformen, und die

Fig. 5  ein Detail der Ausführung nach Fig. 4.

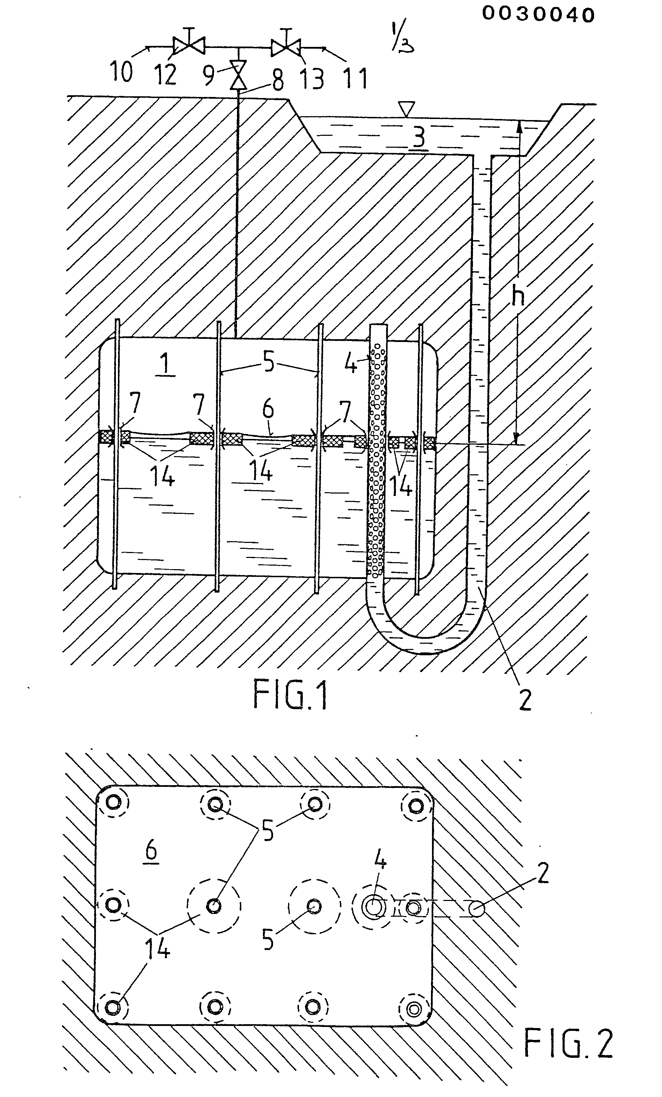

Bei der in Fig. 1 schematisch dargestellten Gleichdruckluftspeicheranlage befindet sich in der Sohle einer Kaverne 1 die Mündung eines Steigrohres 2, dessen oberer druckerzeugender Teil mit der Höhe h zwischen den Wasserspiegeln der Kaverne 1 und eines Ausgleichsbeckens 3 senkrecht ausgebildet ist. Um ein Ausblasen der Wassersäule und damit der Kavernenluft infolge der eingangs beschriebenen Druckhöhenverminderung der Wassersäule zu vermeiden, setzt sich das Steigrohr nach unten in einem U-förmigen Kanal fort, der die genannte Mündung an der Sohle der Kaverne bildet. Wie eingangs in der Einleitung erwähnt, müsste sich dieser U-förmige Kanal ohne die erfindungsgemässen Massnahmen um 0,15 h unter den im Betrieb tiefsten zulässigen Kavernenwasserspiegel hinab erstrecken, was mit einer wesentlichen Erhöhung der

- 5 -

Anlagekosten verbunden ist.

Zum Unterschied von den üblichen, an der Sohle der Kaverne endenden Steigrohren setzt es sich hier in die Kaverne hinein bis zu deren Decke hinauf fort, wo es verankert ist. Diese Steigrohrverlängerung 4 in Form einer über ihre ganze Länge perforierten Säule dient, ebenso wie eine Reihe senkrechter Führungsschienen 5, die am Umfang und, wie aus Fig. 2 hervorgeht, über den ganzen Grundriss der Kaverne gleichmässig verteilt angeordnet sind, zur senkrechten Führung einer den ganzen Kavernengrundriss überdeckenden Plane 6. Die Führungsschienen 5 sind in der Sohle und in der Decke der Kaverne fest verankert. Die Plane 6 besitzt an den Stellen der Führungsschienen 5 und der Steigrohrverlängerung 6 Führungsbüchsen 7, die an ihrem Umfang mit der Plane 7 dichtend verbunden sind. Diese Führungsbüchsen 7 sind an ihren Enden trichterförmig aufgeweitet, um ein Verkanten bzw. die Kantenreibung zu vermeiden. Sie bestehen vorzugsweise aus mit Wasser schmierbarem Kunststoff, aus Gummi oder gummielastischem Material, sind also im Betrieb wartungsfrei, was im vorliegenden Fall wegen der schlecht zugänglichen Kaverne sehr wichtig ist.

Von der Decke der Kaverne aus führt die Luftentnahmeleitung 8 nach Uebertage, wo vor der nicht dargestellten Gasturbinenanlage ein Hauptabsperrventil 9 sowie in den Luftleitungen 10 bzw. 11, die zur Brennkammer bzw. zum Verdichter der Gasturbinenanlage führen, zwei Umschaltventile 12 bzw. 13 vorgesehen sind.

Mit den Führungsbüchsen 7 sind Schwimmer fest verbunden, die

- 6 -

auch mit der Unterseite der Plane 7, beispielsweise mittels Klebung, verbunden sind. Diese Schwimmer müssen wegen des hohen, in der Kaverne herrschenden Druckes druckfest sein. Dafür kommen beispielsweise Körper in Frage, die aus einem spezifisch leichten vielzelligen Kern mit einer flüssigkeitsdichten Hülle bestehen. Die Stützwirkung des Kernes, der z.B. aus einem geeigneten Schaumstoff oder einer Wabenstruktur bestehen kann, muss so gross sein, dass er dem hydro- bzw. aerostatischen Druck in der Kaverne widersteht.

Das Volumen der Schwimmer 14 kann so ausgelegt sein, dass sie die Plane 6, die aus wasserdichtem Material besteht, gerade schwimmend erhalten. Die Plane bildet dann eine Diffusionsbarriere, die eine weitgehende Trennung von Wasser und Luft bewirkt und damit die sonst auftretende starke Lösung von Luft im Wasser verhindert. Die Luft kommt nur an den freien Rändern der Plane, die mit der Kavernenwandung einen schmalen Spalt bilden, in Berührung, darüber hinaus noch an einigen Stellen der Plane, wo kleine Oeffnungen vorgesehen sein können, um ein Abfliessen von Kondenswasser, das sich im Luftraum oberhalb der Plane bilden und auf der Plane sammeln kann, in den Wasserraum unterhalb der Plane zu ermöglichen.

Auf diese Weise kann das unter der Plane befindliche Wasser weitgehend luftfrei gehalten und damit der beim Laden der Kaverne im Steigrohr auftretende "Champagnereffekt" vermieden werden.

Die in der Fig. 1 dargestellte Plane 6 hängt frei über dem Wasserspiegel, so dass sie mit diesem einen flachen, luft-

- 7 -

erfüllten Zwischenraum begrenzt. Zwar kann dadurch mehr Luft durch das Wasser aufgenommen werden, gegenüber einem freien Wasserspiegel wird die gelöste Luftmenge aber trotzdem erheblich niedriger ausfallen, da die Plane die Unruhe des Wasserspiegels dämpft und damit weniger Wasserteilchen mit der Luft in Berührung kommen. Ideal aber ist natürlich die vollständige Trennung von Luft und Wasser durch eine auf dem Wasserspiegel aufliegende Plane, was z.B. durch entsprechende Dimensionierung der Schwimmer 14 zu erreichen ist.

Bei grossen Kavernengrundrissen wird man die Plane aus einer Anzahl kleinerer Planen zusammensetzen.

Denkbar wäre als Diffusionsbarriere zwischen Luft und Wasser auch eine Membran in Form einer hochelastischen und/oder durch Falten hochausdehnbaren Folie, die an ihrem Umfang dichtend eingespannt ist. Für die Funktion als Barriere ist aber absolute Dichtheit der Folie erforderlich, da schon bei geringster Undichtheit das Wasser allmählich in den Luftraum eintreten würde. Abgesehen davon, dass die Wirkung der Folie damit hinfällig wäre, würde bei der Aufladung mit Luft diese Undichtheit für das zu verdrängende Wasser als Drossel wirken und die Folie könnte dann in das Steigrohr hineingezogen und zerrissen werden. Dies könnte auch durch engmaschige Gitter oder dergl. an der Einmündung des Steigrohres in die Kavernensohle nicht vermieden werden. Eine solche riesige, den ganzen Kavernengrundriss überdeckende Membran als Diffusionsbarriere ist also nicht praktikabel.

Hingegen bildet eine auf dem Wasserspiegel lagernde Schicht

- 8 -

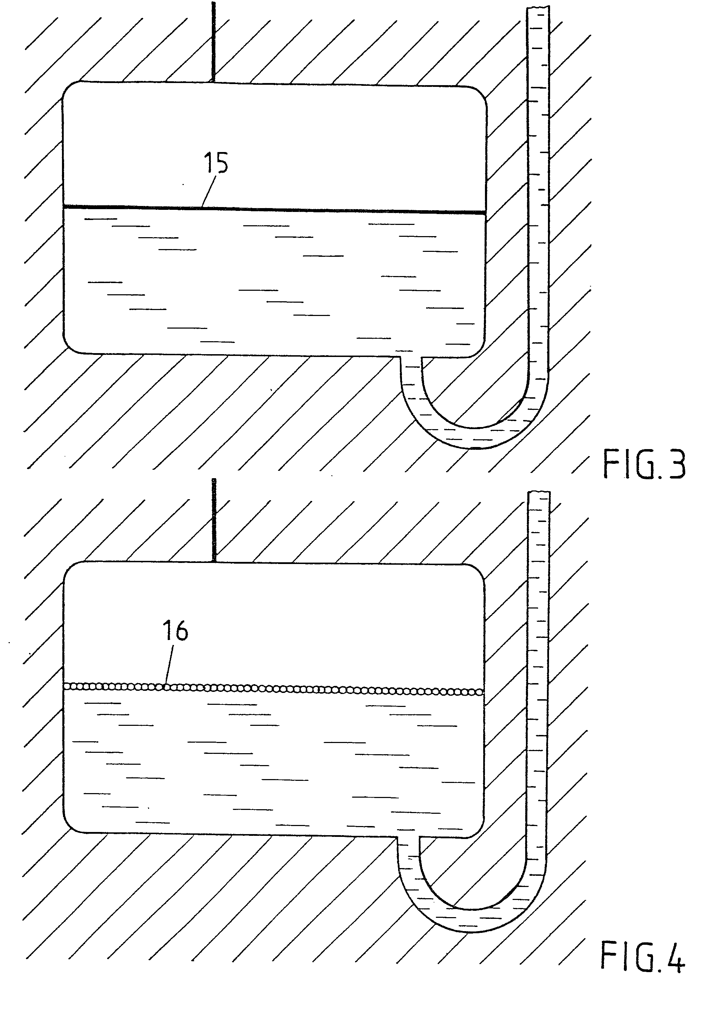

einer Flüssigkeit, die spezifisch leichter ist als Wasser und mit diesem nicht emulgiert, eine wirksame Diffusionsbarriere. Diese flüssige Diffusionsbarriere ist in Fig. 3 mit 15 bezeichnet. Für diesen Zweck geeignete Flüssigkeiten müssen ferner einen Siedepunkt aufweisen, der über der maximal auftretenden Ladelufttemperatur liegt. Sie sind also im allgemeinen schwerflüssig. Ihre Siedekurve muss zudem gewährleisten, dass bei den in der Kaverne und in der Gasturbinenanlage auftretenden Temperaturen und Drücken keine Selbstentzündung auftritt. Der Siedeverlust darf auch nicht allzu gross sein, um nicht zu häufig Kontrollen und Ergänzungen der Flüssigkeitsschicht vornehmen zu müssen.

Für diesen Zweck geeignete Flüssigkeiten sind z.B. Trafoöl, Benzolpentaäthyl, Amyläther und Amylbenzol. Ausser diesen und anderen Kohlenwasserstoffen kommen insbesondere unbrennbare Flüssigkeiten mit den obengenannten Eigenschaften in Frage.

Ein weiteres brauchbares Mittel zur Trennung von Wasser und Luft stellt die in Fig. 4 mit 16 bezeichnete Schwimmkörperschicht dar. Prinzipiell können die einzelnen Schwimmkörper dieser Schicht verschiedene Gestalt und Grösse aufweisen. Sie sollten aber so gross sein, dass sie in ihrer Gesamtheit die Wasseroberfläche möglichst lückenlos abdecken, und derart gestaltet sein, dass sie auf unruhiger Wasseroberfläche nicht zum Rotieren neigen, da anderenfalls eine Diffusion von Luft im Wasser nicht zu verhindern ist.

Vorzugsweise wird man für diesen Zweck Kugeln etwa gleicher Grösse aus einem industriell leicht verarbeitbaren Werk-

- 9 -

stoff, wie druckfestem, vielzelligem Kunststoff mit geschlossener Aussenhaut, verwenden. Aber auch Kork und Holz
kommen dafür in Betracht, wenn auch ihre Anwendung wesentlich teurer sein dürfte.

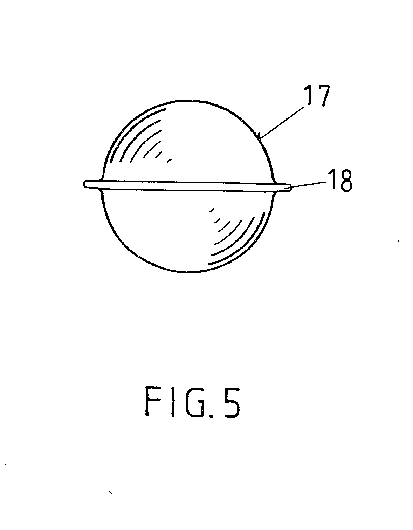

Ein Beispiel für eine vorteilhafte Form solcher Schwimmkörper zeigt die Fig. 5. Es handelt sich dabei um eine Plastikkugel 17 mit einem Wulst 18, der ein Rotieren der Kugel verhindert und im Verein mit den Wülsten benachbarter Kugeln
eine gute Ueberdeckung ergibt.

– 70 –

Bezeichnungsliste
_____

1    Kaverne

2    Steigrohr

3    Ausgleichsbecken

4    Steigrohrverlängerung

5    Führungsschienen

6    Plane

7    Führungsbüchsen

8    Luftentnahmeleitung

9    Hauptabsperrventil

10   Luftleitung zur Brennkammer

11   Luftleitung zum Verdichter

12   Umschaltventil für Brennkammer

13   Umschaltventil für Verdichter

14   Schwimmer

15   Flüssige Diffusionsbarriere

16   Schwimmkörperschicht

17   Plastikkugel

18   Wulst der Plastikkugel

h    Druckhöhe

- 1 -

P a t e n t a n s p r ü c h e

1. Gleichdruckluftspeicheranlage mit Wasservorlage für Gasturbinenkraftwerke, mit einer unterirdischen Kaverne zur Speicherung der Druckluft und Verbindungsleitungen zwischen der Kaverne und dem Verdichter bzw. der Gasturbine, ferner mit einem Ausgleichsbecken und einem dasselbe mit der Kaverne verbindenden Steigrohr, dadurch gekennzeichnet, dass in der Kaverne eine ihren Luftraum vom Wasserraum separierende Diffusionsbarriere vorhanden ist.

2. Gleichdruckluftspeicheranlage nach Anspruch 1, dadurch gekennzeichnet, dass die Diffusionsbarriere aus einer den Kavernengrundriss im wesentlichen vollständig überdeckenden, schwimmfähigen Plane (6) aus wasserundurchlässigem Material besteht.

3. Gleichdruckluftspeicheranlage nach Anspruch 2, dadurch gekennzeichnet, dass in der Kaverne senkrecht angeordnete, in der Sohle und in der Decke der Kaverne verankerte Führungsschienen (5) zur vertikalen Führung der Plane (6) vorgesehen sind, dass die Plane (6) auf den Führungsschienen (5) gleitbare Führungsbüchsen (7) aufweist, dass im Bereich der Führungsbüchsen (7) mit diesen verbundene Schwimmer (14) vorhanden sind, und dass die Plane (6) mit

- 2 -

Ablauflöchern zur Ableitung des sich auf ihr ansammelnden Kondenswassers in den Wasserraum versehen ist.

4. Gleichdruckluftspeicheranlage nach Anspruch 1, dadurch
gekennzeichnet, dass die Diffusionsbarriere aus einer
auf dem Wasserspiegel des Kavernenwassers schwimmenden
Schicht (15) einer im Wasser nicht emulgierbaren, hochsiedenden Flüssigkeit besteht.

5. Gleichdruckluftspeicheranlage nach Anspruch 1, dadurch
gekennzeichnet, dass die Diffusionsbarriere aus Schwimmkörpern besteht, die in ihrer Gesamtheit eine im wesentlichen den Wasserspiegel abdeckende Schicht (16) bilden.

6. Gleichdruckluftspeicheranlage nach Anspruch 5, dadurch
gekennzeichnet, dass die Schwimmkörper aus Kugeln (17)
mit einem Wulst (18) bestehen, wobei letzterer die Aufgabe hat, das Drehen der Kugeln auf der Wasseroberfläche
zu verhindern.

0030040

1/3

FIG.1

FIG.2

142/79

FIG.3

FIG.4

17

18

FIG.5

**Europäisches Patentamt**

**EUROPÄISCHER RECHERCHENBERICHT**

Nummer der Anmeldung

EP 80 20 0048.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 146 135 (GAZ DE FRANCE)<br>* Seite 6, Absatz 1, letzter Satz;<br>Fig. 1C, Position H *<br>-- | 1,4 |
| A | DE - A1 - 2 657 244 (AB ATOMENERGI)<br>* Seite 5, letzter Absatz bis Seite 8;<br>Fig. 1, 2 *<br>-- | 2,3 |
| A | DE - A1 - 2 652 075 (HEILMANN & LITT-<br>MANN BAU-AG )<br>* Seite 9, letzter Absatz bis Seite 11,<br>Absatz 1; Fig. 1 bis 4 *<br>-- | 2 |
| A | DE - A1 - 2 819 946 (P. JACKSON)<br>* Fig. 1 *<br>-- | |
| A | DE - A1 - 2 755 603 (K.W. LEFEVER)<br>* ganzes Dokument *<br>-- | |
| A | AT - B - 248 336 (SHELL INTERNATIONALE<br>RESEARCH MAATSCHAPPIJ N.V.)<br>* ganzes Dokument *<br>-- | |
| A | US - A - 2 688 923 (F.A. BONAVENTURA<br>et al.)<br>* Fig. 1, Positionen 12, 13; Fig. 2,<br>Positionen 35, 36 *<br>-- | |

./..

**KLASSIFIKATION DER ANMELDUNG (Int. Cl.³)**

F 02 C 6/16
B 65 G 5/00
E 21 F 17/16

**RECHERCHIERTE SACHGEBIETE (Int. Cl.³)**

B 65 G 5/00
E 21 F 17/00
F 02 C 6/00
F 03 G 7/00
F 24 J 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 18-02-1981 | STÖCKLE |

EPA form 1503.1 06.78

**Europäisches**
**Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A1 - 2 900 122 (MOTOR COLUMBUS INGENIEURUNTERNEHMUNG AG)  * Seite 8, Absatz 5, Fig. 2 *  -- | 1 |
| A | FR - A - 1 603 912 (INSTITUT FRANCAIS DU PETROLE, DES CARBURANTS ET LU-BRIFIANTS)  * Seite 3, Zeile 33 bis Seite 4, Zeile 2; Fig. 1, Positionen 1, 2 *  ---- | 1 |

**KLASSIFIKATION DER ANMELDUNG (Int. Cl.³)**

**RECHERCHIERTE SACHGEBIETE (Int. Cl.³)**

EPA Form 1503.2  08.78